# EUROPÄISCHE PATENTSCHRIFT

(11) **EP 3 311 498 B1**
(45) Veröffentlichungstag und Bekanntmachung des Hinweises auf die Patenterteilung: **11.10.2023**
(21) Anmeldenummer: 16721143.2
(22) Anmeldetag: 03.05.2016
(51) Int. Cl.: H04B 1/08, H04B 1/10, H04B 7/04, H04B 7/06, H04B 7/10

(54) **SENDEEMPFÄNGER, FAHRZEUG, VERFAHREN UND COMPUTERPROGRAMM FÜR EINEN SENDEEMPFÄNGER**
TRANSCEIVER, VEHICLE, METHOD, AND COMPUTER PROGRAM FOR A TRANSCEIVER
ÉMETTEUR-RÉCEPTEUR, VÉHICULE, PROCÉDÉ ET PROGRAMME INFORMATIQUE DESTINÉ À UN ÉMETTEUR-RÉCEPTEUR

(30) Priorität: 19.06.2015 DE 102015211336
(43) Veröffentlichungstag der Anmeldung: 25.04.2018
(73) Patentinhaber: Bayerische Motoren Werke Aktiengesellschaft, 80809 München (DE)
(72) Erfinder: ARENDT, Christian, 81547 München (DE); FERTL, Peter, 80799 München (DE); POSSELT, Adrian, 80939 München (DE)
(86) Internationale Anmeldenummer: PCT/EP2016/059854
(87) Internationale Veröffentlichungsnummer: WO 2016/202496

(56) Entgegenhaltungen:
- US-A1- 2014 321 582

## Beschreibung

### Technisches Gebiet

Ausführungsbeispiele befassen sich mit einem Sendeempfänger, einem Fahrzeug, einem Verfahren und einem Computerprogramm für einen Sendeempfänger, insbesondere aber nicht ausschließlich, mit kooperativer Kanalschätzung unter Verwendung einer Mehrzahl von ggf. verteilten Antennen an einem Fahrzeug.

### Hintergrund

Mobilfunksysteme, insbesondere auf zellularer Basis, gibt es bereits seit mehreren Generationen. Die derzeitige Netzwerkplanung und auch die Weiterentwicklung der zellularen Kommunikationssysteme basiert im Wesentlichen auf stationären Basisstationen, die schnurlose Daten- und Kommunikationsdienste in ihren jeweiligen Abdeckungsbereichen, den sogenannten Zellen, zur Verfügung stellen. Darüber hinaus ist auch Kommunikation zwischen den Endgeräten direkt denkbar (auch engl. Device-to-Device-Kommunikation). Dabei werden mobile Endgeräte zum Bereitstellen der Schnurlosdienste auf der Benutzerseite verwendet. Beispielsweise kommen solche mobilen Endgeräte auch in Fahrzeugen zum Einsatz. Im Bereich der Fahrzeuge ergeben sich für den Einsatz von Antennensystemen andere Möglichkeiten als im Bereich der Mobiltelefone, wie z.B. Handys, Computer, auch engl. Smartphones, etc.

Heutige Fahrzeugantennensysteme sind für die mobile Anbindung an zellulare Mobilfunksysteme sowie Rundfunksysteme (auch engl. Broadcasting-Systeme) konzipiert. Um die erforderlichen Datenraten und Qualitätsanforderungen zu gewährleisten, kommen bisher vorwiegend Einzelantennensysteme zur Vernetzung von Fahrzeugen zum Einsatz. In der aktuellen Generation verschiedener Fahrzeugderivate werden zunehmend auch Mehrantennensysteme verbaut (auch sogenannte Multiple-Input-Multiple-Output (MIMO)-Systeme). Hierbei handelt es sich z.B. um zwei Antennen, die an einem zentralen Ort am Fahrzeug montiert sind (zentralisierter Ansatz). Darüber hinaus finden sich im Stand der Technik Mehrantennenkonzepte, die beispielsweise Empfangsdiversität der über mehrere Antennen empfangenen Signale ausnutzen. Darüber hinaus können Fahrzeuge über mehrere Antennen für unterschiedliche Systeme oder Dienste verfügen, z.B. Rundfunkempfangsantennen, Mobilfunkantennen, Antennen für Navigationssysteme, etc.

US 2014/0321582 A1 lehrt ein Verfahren und eine Vorrichtung zur parallelen Datenverarbeitung. In einer Ausführungsform der vorliegenden Erfindung wird ein Verfahren zur parallelen Datenverarbeitung bereitgestellt. Mittels der vorliegenden Erfindung kann die parallele Datenverarbeitungskapazität eines Universal-Datenprozessors verwendet werden, um Daten bei der Aufwärtsdatenübertragung parallel zu verarbeiten und weiter die Empfängerbetriebseffizienz zu verbessern. Allerdings schweigt die Druckschrift zumindest dazu, dass eine Kontrolleinrichtung ausgebildet ist, um anhand der Information über den Radiokanal zwischen der ersten Untergruppe der Antennen und der Basisstation des Mobilfunksystems Information über einen Radiokanal zwischen der zweiten Untergruppe der Antennen und der Basisstation des Mobilfunksystems zu bestimmen. Weiter schweigt sie zu der Kontrolleinrichtung, die ausgebildet ist, um die Information über den Radiokanal zwischen der zweiten Untergruppe der Antennen und der Basisstation des Mobilfunksystems basierend auf der Annahme zu bestimmen, dass zumindest eine Antenne der ersten Untergruppe von Antennen in einer Fahrtrichtung des Fahrzeugs vor zumindest einer Antenne der zweiten Untergruppe angeordnet ist, und/oder dass eine Antenne der zweiten Untergruppe von Antennen den gleichen Radiokanal wie eine Antenne der ersten Untergruppe zeitlich verzögert erfährt.

### Zusammenfassung

Ausführungsbeispiele der vorliegenden Erfindung basieren auf dem Kerngedanken ein alternatives Konzept (ggf. Paradigmenwechsel in der Partitionierung der Fahrzeugvernetzungsarchitektur) zur Verwendung von Antennen an einem Fahrzeug zu schaffen. Ein Fahrzeug bietet oftmals die Möglichkeit, eine Mehrzahl von Antennen beispielsweise auch an verschiedenen Standorten anzubringen und auszunutzen. Es ist ein Kerngedanke von Ausführungsbeispielen eine Mehrzahl von ggf. verteilten Antennen eines Fahrzeugs in Untergruppen einzuteilen und je eine Untergruppe zur Kanalschätzung und zur Kommunikation oder zum eigentlichen Datenaustausch zu verwenden.

Ausführungsbeispiele können somit eine größere Anzahl von Antennen ausnutzen und so Vorteile aus der räumlichen Verteilung und ggf. Separation (Dekorrelation der einzelnen Übertragungspfade) der Antennen ziehen.

Ausführungsbeispiele schaffen einen Sendeempfänger für ein Fahrzeug zur Kommunikation in einem Mobilfunksystem. Der Sendeempfänger umfasst eine oder mehrere Schnittstellen für eine Mehrzahl von Antennen. Der Sendeempfänger weist ferner eine Sendeempfangseinrichtung auf, die ausgebildet ist, um über die ein oder mehreren Schnittstellen und über zumindest einen Teil der Mehrzahl der Antennen in dem Mobilfunksystem zu kommunizieren. Der Sendeempfänger umfasst eine Kontrolleinrichtung, die ausgebildet ist, um die Sendeempfangseinrichtung und die ein oder mehreren Schnittstellen zu kontrollieren. Die Kontrolleinrichtung ist ferner ausgebildet, um über eine erste Untergruppe der Mehrzahl von Antennen Information über einen Radiokanal zwischen der ersten Untergruppe von Antennen und einer Basisstation des Mobilfunksystems zu bestimmen und um über eine zweite Untergruppe der Mehrzahl von Antennen mit der Basisstation des Mobilfunksystems zu kommunizieren. Ausführungsbeispiele können so ermöglichen, dass einer Mehrzahl von Antennen ausnutzbar wird. Kanalschätzung und eigentliche Datenkommunikation können über unterschiedliche Untergruppen (auch engl. Cluster) von Antennen durchgeführt werden.

In manchen Ausführungsbeispielen kann die Mehrzahl von Antennen zwei oder mehr Antennen verschiedener Orientierung, verschiedener Polarisation, verschiedener Anbringungsorte an dem Fahrzeug, verschiedenen Antennengewinns, oder verschiedener Abstrahlcharakteristika umfassen. Ausführungsbeispiele können so eine Vielfalt verschiedener Antennen nutzbar machen, sodass entsprechende Diversitätsgewinne, Strahlformungsgewinne oder Multi-Streaminggewinne realisierbar werden können. Beispielsweise kann die Mehrzahl von Antennen einem Antennensystem mit dezentralen, verteilten Antennen entsprechen. In Ausführungsbeispielen kann die Information über den Radiokanal Information über zumindest eine Einfallsrichtung von Radiosignalen, beispielsweise relativ zu dem Fahrzeug, umfassen.

In Ausführungsbeispielen ist die Kontrolleinrichtung ausgebildet, um anhand der Information über den Radiokanal zwischen der ersten Untergruppe der Antennen und der Basisstation des Mobilfunksystems Information über einen Radiokanal zwischen der zweiten Untergruppe der Antennen und der Basisstation des Mobilfunksystems zu bestimmen. Zumindest manche Ausführungsbeispiele können so eine Vorhersage des Radiokanals oder eines Zustand eines Radiokanals der zweiten Untergruppe, der zur Datenkommunikation verwendet wird, basierend auf einem Radiokanal oder eines Zustands eines Radiokanals der ersten Untergruppe für die Kanalschätzung ermöglichen.

Beispielsweise kann die Kontrolleinrichtung ferner ausgebildet sein, um bei der Bestimmung der Information über den Radiokanal zwischen der zweiten Untergruppe der Antennen und der Basisstation des Mobilfunksystems ferner eine Geschwindigkeit, Verfügbarkeitsinformation über das Mobilfunksystem und/oder eine Fahrtrichtung des Fahrzeugs zu berücksichtigen. Insofern können einige Ausführungsbeispiele eine Kanalvorhersage basierend auf einem Bewegungszustand des Fahrzeuges oder einer aufgrund der Verfügbarkeitsinformation absehbaren Netzveränderung ermöglichen.

Beispielsweise kann die Kontrolleinrichtung ausgebildet sein, um über die ein oder mehreren Schnittstellen Information über die Geschwindigkeit, die Verfügbarkeitsinformation über das Mobilfunksystem und/oder die Fahrtrichtung des Fahrzeugs zu bestimmen. In manchen Ausführungsbeispielen können so Fahrzeugsensoren oder Daten von Fahrzeugsensoren oder aus Datenspeichern genutzt werden, um eine verbesserte Kanalvorhersage oder Kanalprädiktion zu erreichen.

Die Kontrolleinrichtung ist in Ausführungsbeispielen ausgebildet, um die Information über den Radiokanal zwischen der zweiten Untergruppe der Antennen und der Basisstation des Mobilfunksystems basierend auf der Annahme zu bestimmen, dass zumindest eine Antenne der ersten Untergruppe von Antennen in einer Fahrtrichtung des Fahrzeugs vor zumindest einer Antenne der zweiten Untergruppe angeordnet ist, oder dass zumindest eine Antenne der zweiten Untergruppe von Antennen den gleichen Radiokanal wie zumindest eine Antenne der ersten Untergruppe zeitlich verzögert erfährt. Insofern erfolgt eine Art kooperative Kanalschätzung basierend auf der Erwartung, dass die zweite Untergruppe die gleichen Radiokanalverhältnisse wie die erste Untergruppe jedoch zeitlich etwas später erfährt. Dies kann beispielsweise dadurch erreicht werden, dass die erste Untergruppe räumlich so angeordnet ist, dass sie einen bestimmten Ort aufgrund der Fortbewegungsrichtung des Fahrzeugs, vor der zweiten Untergruppe erreicht. Die Kontrolleinrichtung kann ausgebildet sein, um eine Auswahl von Antennen aus der Mehrzahl von Antennen für die erste und die zweite Untergruppe von Antennen adaptiv anzupassen. Insofern können günstige oder gewinnbringende Antennen bestimmt und verwendet werden, bzw. es kann eine Anpassung einer Auswahl günstiger Antennen erfolgen.

Die Kontrolleinrichtung kann demnach auch ausgebildet sein, um die erste Untergruppe von Antennen basierend auf einer Fahrtrichtung des Fahrzeugs so auszuwählen, dass die erste Untergruppe in Fahrtrichtung des Fahrzeugs vor der zweiten Untergruppe angeordnet ist. Insofern kann die Auswahl der Antennen für die beiden Untergruppen an die Fahrtrichtung und die Funkverhältnisse in manchen Ausführungsbeispielen angepasst werden. Beispielsweise kann die Kontrolleinrichtung ausgebildet sein, um eine Anzahl von Antennen in der ersten Untergruppe und/oder in der zweiten Untergruppe von Antennen adaptiv anzupassen, z.B. basierend auf einem über die erste Untergruppe geschätzten Funkkanal.

In weiteren Ausführungsbeispielen kann die Sendeempfangseinrichtung zwei oder mehr Sendeempfangsmodule umfassen, die mit den Antennen der Mehrzahl von Antennen gekoppelt sind. Manche Ausführungsbeispiele können so Kanalschätzung und Datenkommunikation ggf. getrennten Sendeempfangsmodulen zuordnen. Die Kontrolleinrichtung kann ausgebildet sein, um über die Antennen in der zweiten Untergruppe eine Strahlformung (auch engl. Beamforming) bezüglich der Basisstation des Mobilfunksystems durchzuführen. Manche Ausführungsbeispiele können so innerhalb der zweiten Untergruppe von Antennen Signalverarbeitungskonzepte zur Anwendung bringen, die mit zusätzlichen Kapazitäts- oder Signalgewinnen verbunden sind. Die Kontrolleinrichtung kann beispielsweise ausgebildet sein, um eine Strahlformung über die Antennen in der zweiten Untergruppe adaptiv anzupassen, z.B. um die Strahlformung anhand der jeweiligen Funk- und Interferenzsituation anzupassen.

Ausführungsbeispiele schaffen auch ein Fahrzeug mit einem Ausführungsbeispiel des oben beschriebenen Sendeempfängers. Die Mehrzahl von Antennen kann dabei von dem Fahrzeug umfasst sein. Beispielsweise kann die erste Untergruppe von Antennen die gleiche Anzahl von Antennen umfassen wie die zweite Untergruppe von Antennen. Dies kann in Ausführungsbeispielen die Kanalschätzung erleichtern, da gleich viele Antennen zur Kanalschätzung und zur Datenübertragung verwendet werden. Ferner können die Antennen der ersten Untergruppe untereinander die gleiche Geometrie aufweisen, wie die Antennen der zweiten Untergruppe. In manchen Ausführungsbeispielen kann sich so die Kanalschätzung für die zweite Untergruppe weiter erleichtern, da keine Anpassung aufgrund unterschiedlicher Geometrien zwischen den Antennen in den Untergruppen notwendig ist. Darüber hinaus können in einigen weiteren Ausführungsbeispielen die Antennen der ersten Untergruppe die gleiche Antennencharakteristik aufweisen, wie die Antennen der zweiten Untergruppe. In solchen Ausführungsbeispielen kann sich die Schätzung für den Kanal der zweiten Untergruppe entsprechend vereinfachen. Die erste Untergruppe kann in Ausführungsbeispielen andere Antennen als die zweite Untergruppe umfassen.

Ausführungsbeispiele schaffen ferner ein Verfahren für einen Sendeempfänger für ein Fahrzeug zur Kommunikation in einem Mobilfunksystem. Das Verfahren umfasst ein Bestimmen von Information über einen Radiokanal zwischen einer ersten Untergruppe von Antennen einer Mehrzahl von Antennen und einer Basisstation des Mobilfunksystems. Das Verfahren umfasst ferner ein Kommunizieren mit der Basisstation des Mobilfunksystems über eine zweite Untergruppe der Mehrzahl von Antennen.

Ausführungsbeispiele schaffen ferner ein Computerprogramm zur Durchführung zumindest eines der oben beschriebenen Verfahren, wenn das Computerprogramm auf einem Computer, einem Prozessor oder einer programmierbaren Hardwarekomponente abläuft. Ausführungsbeispiele schaffen auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

### Figurenkurzbeschreibung

Ausführungsbeispiele werden nachfolgend bezugnehmend auf die beiliegenden Figuren näher erläutert. Es zeigen:
Fig. 1 ein Ausführungsbeispiel eines Sendeempfängers für ein Fahrzeug;
Fig. 2 ein Ausführungsbeispiel eines Fahrzeugs mit einem Ausführungsbeispiel eines Sendeempfängers;
Fig. 3 ein weiteres Ausführungsbeispiel eines Fahrzeugs mit einem Ausführungsbeispiel eines Sendeempfängers;
Fig. 4 ein Ausführungsbeispiel eines Fahrzeugs mit einem Ausführungsbeispiel eines Sendeempfängers mit adaptiver Antennenwahl; und
Fig. 5 ein Blockdiagramm eines Ausführungsbeispiels eines Verfahrens für einen Sendeempfänger.

### Beschreibung

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," "eine", "eines " und "der, die, das" auch die Pluralformen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Ausführungsbeispiele können Konzepte zur Kanalschätzung nutzen, die zumindest eine Schätz- und eine Empfangsantenne nutzen und die auf eine Optimierung oder Verbesserung der Nachrichtenübertragung im Fahrbetrieb abzielen. Unter Umständen sind hier auch mehrere, in Fahrtrichtung hintereinander angeordnete Schätzantennen in Verwendung. Ausführungsbeispiele können dabei von dezentralen oder verteilten Antennensystemen Gebrauch machen, die eine kooperative Kanalschätzung zwischen den räumlich separierten Antennen ermöglichen.

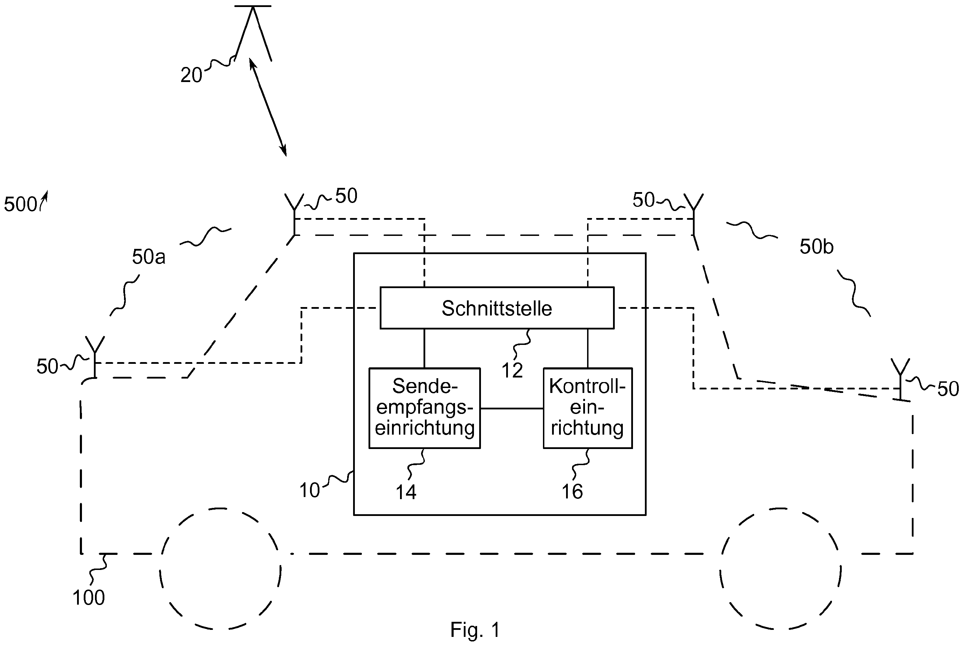

Fig. 1 zeigt ein Ausführungsbeispiel eines Sendeempfängers 10 für ein Fahrzeug 100 zur Kommunikation in einem Mobilfunksystem 500. Der folgende Teil der Beschreibung beschreibt keinen Teil der vorliegenden Erfindung. Hier und im Folgenden sei unter dem Begriff Fahrzeug beispielsweise ein Kraftfahrzeug (KFZ), ein Auto, ein Bus, ein Zug, ein Flugzeug, ein Schiff, ein Zweirad etc. verstanden. Der Sendeempfänger 10 kann dabei insgesamt als Einheit, z.B. als elektrische Schaltung oder Modul ausgebildet sein, das zur Verwendung in einem Fahrzeug angepasst ist. In manchen Ausführungsbeispielen kann der Sendeempfänger auch in andere Komponente mit integriert sein, z.B. in einem Anbindungs-Sendeempfänger der zusammen mit einem Basisstations-Sendeempfänger einen mobilen Relay-Sendeempfänger für das Fahrzeug 100 bildet. Wie die Fig.1 anhand der gestrichelten Linien zeigt, schaffen Ausführungsbeispiele auch ein Fahrzeug 100, das den Sendempfänger 10 umfasst.

Der folgende Teil der Beschreibung beschreibt ebenfalls keinen Teil der vorliegenden Erfindung. In Ausführungsbeispielen kann das Mobilfunksystem 500 beispielsweise einem der Mobilfunksysteme entsprechen, die von entsprechenden Standardisierungsgremien, wie z.B. der 3rd Generation Partnership Project (3GPP)-Gruppe, standardisiert werden. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), oder auch Mobilfunksysteme anderer Standards, wie z. B. das Worldwide Interoperability for Microwave Access (WIMAX), IEE-E802.16 oder Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz und Mobilfunknetzwerk synonym benutzt.

Im Folgenden wird angenommen, dass ein solches Mobilfunksystem 500 zumindest einen stationären Sendeempfänger im Sinne einer Basisstation 20 umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger 10 (Mobilfunkendgerät) umfasst, wobei sich der Begriff mobil hier darauf beziehen soll, dass mit diesem Sendeempfänger über die Luftschnittstelle, d. h. kabellos/schnurlos, kommuniziert wird. Der folgende Teil der Beschreibung beschreibt auch keinen Teil der vorliegenden Erfindung. Ein solcher mobiler Sendeempfänger kann beispielsweise einem tragbaren Telefon, einem Smartphone, einem Tablet-Computer, einem tragbaren Computer oder einem Funkmodul entsprechen, das nicht zwingend mobil in dem Sinne ist, als dass es sich tatsächlich gegenüber seiner Umgebung bewegt. Der Sendeempfänger kann auch stationär sein (z.B. relativ zu einem KFZ), mit dem Mobilfunknetz jedoch drahtlos kommunizieren. Insofern kann die bereits erwähnte Basisstation einer Basisstation einem der oben erwähnten Standards entsprechen, beispielsweise einer NodeB, einer eNodeB, usw.

Der folgende Teil der Beschreibung beschreibt keinen Teil der vorliegenden Erfindung. Ein Basisstations-Sendeempfänger oder eine Basisstation (diese Begriffe können äquivalent verwendet werden) kann ausgebildet sein, um mit einem oder mehreren aktiven Mobilfunkgeräten zu kommunizieren und um in oder benachbart zu einem Versorgungsbereich eines anderen Basisstations-Sendeempfängers oder einer Basisstation zu kommunizieren, z.B. als Makrozell-Basisstation oder als Kleinzell-Basisstation. Somit können Ausführungsformen ein Mobilkommunikationssystem mit einem oder mehreren Mobilfunkendgeräten und einer oder mehreren Basisstationen umfassen, wobei die Basisstations-Sendempfänger Makrozellen oder kleine Zellen bereitstellen können, z. B. Pico- , Metro- oder Femto -Zellen. Ein mobiler Sendeempfänger oder Mobilfunkendgerät kann einem Smartphone (intelligentes Telefon), einem Handy, einem Benutzergerät, einem Funkgerät, einer Mobilen, einer Mobilstation, einem Laptop, einem Notebook, einem Personal Computer (PC), einem Personal Digital Assistant (PDA), einem Universal Serial Bus (USB)-Stick oder-Adapter, einem Auto, etc., entsprechen. Ein mobiler Sendeempfänger kann auch als engl. "User Equipment (UE)" oder Mobile im Einklang mit der 3GPP- Terminologie bezeichnet werden.

Der folgende Teil der Beschreibung beschreibt ebenfalls keinen Teil der vorliegenden Erfindung. Ein Basisstations-Sendeempfänger oder eine Basisstation kann zumindest aus der Sicht eines Mobilfunkendgerätes in einem feststehenden oder zumindest festverbundenen Teil des Netzwerks oder Systems befinden. Ein Basisstation-Sendeempfänger oder eine Basisstation kann auch einem Remote Radio Head, einer Relay-Station, einem Übertragungspunkt, einem Zugriffspunkt (auch engl. "Access Point"), einem Funkgerät, einer Makrozelle, einer kleinen Zelle, einer Mikrozelle, einer Femtozelle, einer Metrozelle usw. entsprechen. Eine Basisstation oder ein Basisstations-Sendeempfänger wird somit als logisches Konzept eines Knotens/einer Einheit zur Bereitstellung eines Funkträgers oder von Funkverbindungen über die Luftschnittstelle verstanden, über den oder die einem Endgerät/mobile Sendeempfänger Zugang zu einem Mobilfunknetz verschafft wird.

Der folgende Teil der Beschreibung beschreibt auch keinen Teil der vorliegenden Erfindung. Eine Basisstation oder ein Basisstations-Sendeempfänger kann eine drahtlose Schnittstelle für Mobilfunkendgeräte zu einem verdrahteten Netzwerk darstellen. Die verwendeten Funksignale können durch 3GPP standardisierte Funksignale sein oder allgemein Funksignale in Übereinstimmung mit einer oder mehreren der oben genannten Systeme. So kann eine Basisstation oder eine Basisstations-Sendeempfänger einer NodeB, einer eNodeB, einer Base Transceiver Station (BTS), einen Zugangspunkt, einen Remote Radio Head, einem Übertragungspunkt, einer Relaystation, etc. entsprechen, die in weitere Funktionseinheiten unterteilt sein kann.

Ein Mobilfunkendgerät oder mobiler Sendeempfänger kann einer Basisstation oder Zelle zugeordnet werden oder bei dieser registriert sein. Der folgende Teil der Beschreibung beschreibt keinen Teil der vorliegenden Erfindung. Der Begriff Zelle bezieht sich auf einen Abdeckungsbereich der Funkdienste, die durch eine Basisstation bereitgestellt werden, z.B. von einer NodeB (NB), einer eNodeB (eNB), einem Remote Radio Head, einem Übertragungspunkt, eine Relay-Station, etc. Eine Basisstation kann eine oder mehrere Zellen auf einer oder mehreren Trägerfrequenzen bereitstellen. In manchen Ausführungsformen kann eine Zelle auch einem Sektor entsprechen. Z.B. können Sektoren mit Sektorantennen, die zur Abdeckung eines Winkelabschnitts um einen Antennenstandort herum ausgebildet sind, gebildet werden. In einigen Ausführungsformen kann eine Basisstation beispielsweise zum Betrieb von drei oder sechs Zellen oder Sektoren ausgelegt sein (z.B. 120° im Fall von drei Zellen und 60° im Fall von sechs Zellen). Eine Basisstation kann mehrere Sektorantennen umfassen. Im Folgenden können die Begriffe Zelle und Basisstation auch synonym verwendet werden.

Der folgende Teil der Beschreibung beschreibt ebenfalls keinen Teil der vorliegenden Erfindung. Mit anderen Worten kann in den Ausführungsformen das Mobilkommunikationssystem auch ein heterogenes Zellnetzwerk (HetNet) umfassen, das unterschiedliche Zelltypen aufweist, z.B. Zellen mit geschlossenen Nutzergruppen (auch engl. "Close Subscriber Group CSG") und offenen Zellen sowie Zellen unterschiedlicher Größe, wie z.B. Makrozellen und kleine Zellen, wobei der Abdeckungsbereich einer kleinen Zelle kleiner ist als der Abdeckungsbereich einer Makrozelle. Eine kleine Zelle kann einer Metrozelle, einer Mikrozelle, einer Picozelle, einer Femtozelle usw. entsprechen. Die Abdeckungsbereiche der einzelnen Zellen werden durch die Basisstationen für ihre Versorgungsgebiete bereitgestellt und hängen von den Sendeleistungen der Basisstationen und den Interferenzbedingungen in dem jeweiligen Bereich ab. In manchen Ausführungsformen kann Abdeckungsbereich einer kleinen Zelle zumindest teilweise von einem Versorgungsbereich einer anderen Zelle umgeben sein oder teilweise mit dem Versorgungsbereich einer z.B. Makrozelle übereinstimmen oder überlappen. Kleine Zellen können eingesetzt werden, um die Kapazität des Netzwerks zu erweitern. Eine Metrozelle kann daher verwendet werden, um eine kleinere Fläche als eine Makrozelle abzudecken, z.B. werden Metrozellen verwendet, um eine Straße oder einen Abschnitt in einem Ballungsgebiet abzudecken. Für eine Makrozelle kann der Abdeckungsbereich einen Durchmesser in der Größenordnung von einem Kilometer oder mehr haben, für eine Mikrozelle kann der Abdeckungsbereich einen Durchmesser von weniger als einem Kilometer haben und eine Picozelle kann einen Abdeckungsbereich mit einen Durchmesser von weniger als 100m haben. Eine Femtozelle kann den kleinsten Abdeckungsbereich aufweisen und sie kann verwendet werden, um beispielsweise einen Haushalts-, einen KFZ- oder einen Gate-Bereich auf dem Flughafen abzudecken, d.h. ihr Sendegebiet kann einen Durchmesser von unter 50m zu haben.

Die Fig. 1 zeigt ferner, dass der Sendeempfänger 10 eine oder mehrere Schnittstellen 12 aufweist, die ausgebildet sind, um mit einer Mehrzahl von Antennen 50 zu kommunizieren. Der folgende Teil der Beschreibung beschreibt auch keinen Teil der vorliegenden Erfindung. Die Mehrzahl von Antennen ist in der Fig. 1 mittel 4 Antennensymbolen gezeigt und kann in Ausführungsbeispielen auch mehr oder weniger Antennen umfassen, beispielsweise zwei oder mehr Antennen. Eine einzelne Antenne oder ein einzelnes Antennenelement kann dabei unterschiedliche Form, Gestalt und Eigenschaften aufweisen. Z.B. können Dipolantennen, Patch-Antennen, Flächenantennen, Gruppenantennen, magnetische Antennen usw. sowie deren Elemente eingesetzt werden.

In Ausführungsbeispielen können die ein oder mehreren Schnittstellen 12 als beliebige Schnittstellen, die sich für eine solche Kommunikation eignen, ausgebildet sein. Der folgende Teil der Beschreibung beschreibt keinen Teil der vorliegenden Erfindung. Denkbar sind hier beliebige Implementierungen, die den Austausch von Daten bzw. Kontrollinhalten, Radiosignalen, Hochfrequenzsignalen zwischen der Mehrzahl von Antennen und einer Sendeempfangseinrichtung 14, die im Folgenden noch näher erläutert wird, erlauben. Beispielsweise sind beliebige serielle oder auch parallele, analoge wie auch digitale, Schnittstellen denkbar. In manchen Ausführungsbeispielen können die Radiosignale erst in unmittelbarer Nähe der jeweiligen Antennen oder Antennenelemente gebildet werden. Demzufolge können die Antennen auch entsprechende Verstärker, Wandler, Mischer, Konverter, auch engl. Remote Radio Heads (RRHs) etc. umfassen. Insofern können über die ein oder mehreren Schnittstellen 12 auch Basisbanddaten in digitaler oder diskreter Form kommuniziert werden. In Ausführungsbeispielen kann die Sendeempfangseinrichtung 12 zwei oder mehr Sendeempfangsmodule, z.B. RRHs, umfassen, die mit der Mehrzahl von Antennen 50 und/oder den Untergruppen 50a, 50b gekoppelt sind.

Wie die Fig. 1 zeigt, umfasst das Ausführungsbeispiel des Sendeempfängers 10 eine Sendeempfangseinrichtung 14, die ausgebildet ist, um über die ein oder mehreren Schnittstellen 12 und über zumindest einen Teil der Mehrzahl der Antennen 50 in dem Mobilfunksystem 500 zu kommunizieren. Die Sendeempfangseinrichtung 14 ist mit den ein oder mehreren Schnittstellen 12 gekoppelt. Der folgende Teil der Beschreibung beschreibt ebenfalls keinen Teil der vorliegenden Erfindung. In Ausführungsbeispielen kann die Sendeempfangseinrichtung 14 typische Sender- bzw. Empfängerkomponenten enthalten. Darunter können beispielsweise ein oder mehrere Filter, ein oder mehrere Mischer, ein oder mehrere Verstärker, ein oder mehrere Diplexer, ein oder mehrere Duplexer, usw. fallen. Je nach Implementierung, können die vorgenannten Komponenten in der Sendeempfangseinrichtung 14 ausgebildet sein oder auch in oder bei den Antennen 50.

Wie die Fig. 1 weiter zeigt, umfasst der Sendeempfänger 10 ferner eine Kontrolleinrichtung 16, die ausgebildet ist, um die Sendeempfangseinrichtung 14 und die ein oder mehreren Schnittstellen 12 zu kontrollieren. Die Kontrolleinrichtung 16 ist mit der Sendeempfangseinrichtung 14 und den ein oder mehreren Schnittstellen 14 gekoppelt. Die Kontrolleinrichtung 16 ist ferner ausgebildet, um über eine erste Untergruppe 50a der Mehrzahl von Antennen 50 Information über einen Radiokanal zwischen der ersten Untergruppe 50a und einer Basisstation 20 des Mobilfunksystems 500 zu bestimmen. Die Kontrolleinrichtung 16 ist ferner ausgebildet, um über eine zweite Untergruppe 50b der Mehrzahl von Antennen 50 mit der Basisstation 20 des Mobilfunksystems 500 zu kommunizieren. Die erste oder die zweite Untergruppe 50a, 50b können ein oder mehrere Antennen der Mehrzahl von Antennen 50 umfassen.

Der folgende Teil der Beschreibung beschreibt keinen Teil der vorliegenden Erfindung. In Ausführungsbeispielen kann die Kontrolleinrichtung 16 einem beliebigen Controller oder Prozessor oder einer programmierbaren Hardwarekomponente entsprechen. Beispielsweise kann die Kontrolleinrichtung 16 auch als Software realisiert sein, die für eine entsprechende Hardwarekomponente programmiert ist. Insofern kann die Kontrolleinrichtung 16 als programmierbare Hardware mit entsprechend angepasster Software implementiert sein. Dabei können beliebige Prozessoren, wie Digitale Signalprozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren zur Implementierung der Kontrolleinrichtung 16 denkbar.

Der folgende Teil der Beschreibung beschreibt ebenfalls keinen Teil der vorliegenden Erfindung. Obwohl in dem in der Fig. 1 illustrierten Ausführungsbeispiel die Mehrzahl von Antennen mit gleichen Symbolen dargestellt ist, können sich die einzelnen Antennen der Mehrzahl von Antennen 50 unterscheiden. Beispielsweise können Antennen verschiedener Orientierung, verschiedener Polarisation, verschiedener Anbringungsorte an dem Fahrzeug 100, verschiedenen Antennengewinns, oder verschiedener Abstrahlcharakteristika in der Mehrzahl von Antennen 50 umfasst sein. Die Mehrzahl von Antennen 50 kann einem Antennensystem mit dezentralen und/oder verteilten Antennen entsprechen. Dabei kann die Struktur oder die Form des Fahrzeugs 100 ausgenutzt werden, um die Antennen an verschiedenen Stellen des Fahrzeugs 100 anzubringen und unterschiedlich auszurichten. Ausführungsbeispiele können so beispielsweise die Diversität der Antennen ausnutzen, da diese aufgrund der unterschiedlichen Anbringungsorte, Orientierung, Polarisation, usw. ggf. unabhängige oder unterschiedliche Empfangs- und/oder Sendeeigenschaften bieten können.

Der folgende Teil der Beschreibung beschreibt auch keinen Teil der vorliegenden Erfindung. Manche Ausführungsbeispiele können auch von Strahlformungskonzepten Gebrauch machen und dabei mehrere Antennen so ansteuern, dass sich deren Radiosignale für bestimmte Raumrichtungen gezielt konstruktiv (z.B. in Richtung der Basisstation) oder auch destruktiv (z.B. zur räumlichen Ausblendung eines Störers) überlagern. Die Kontrolleinrichtung 16 kann ausgebildet sein, um zumindest über die Antennen in der zweiten Untergruppe 50b eine Strahlformung bezüglich der Basisstation 20 des Mobilfunksystems 500 durchzuführen. Ggf. kann auch innerhalb der ersten Untergruppe 50a ein entsprechendes Strahlformungskonzept bei der Bestimmung der Information über den Radiokanal berücksichtigt werden, beispielsweise um identische Strahlformungsgewinne innerhalb der Untergruppen 50a und 50b zu berücksichtigen. In einigen Ausführungsbeispielen kann die Kontrolleinrichtung 16 ausgebildet sein, um eine Strahlformung über die Antennen in der zweiten Untergruppe 50b adaptiv anzupassen, beispielsweise durch sogenanntes adaptives Beamforming oder adaptive Strahlumschaltung (auch Beam-Switching) oder andere Konzepte im Bereich der sogenannten "intelligenten Antennen". In Ausführungsbeispielen kann die Kontrolleinrichtung 16 die ein oder mehreren Schnittstellen 12, direkt oder auch indirekt beispielsweise über die Sendeempfangseinrichtung 14, z.B. im Sinne eines Schalters, einer Schaltmatrix oder auch eines Multi-/Diplexers kontrollieren und so jeweils ein oder mehrere Antennen den Untergruppen 50a, 50b zuordnen oder zuweisen. In manchen Ausführungsbeispielen kann die Kontrolleinrichtung 16 Signale für einzelne Antennen oder Untergruppen 50a, 50b auch entsprechend verarbeiten, d.h. beispielsweise in Betrag und Phase beeinflussen, kombinieren, filtern, etc.

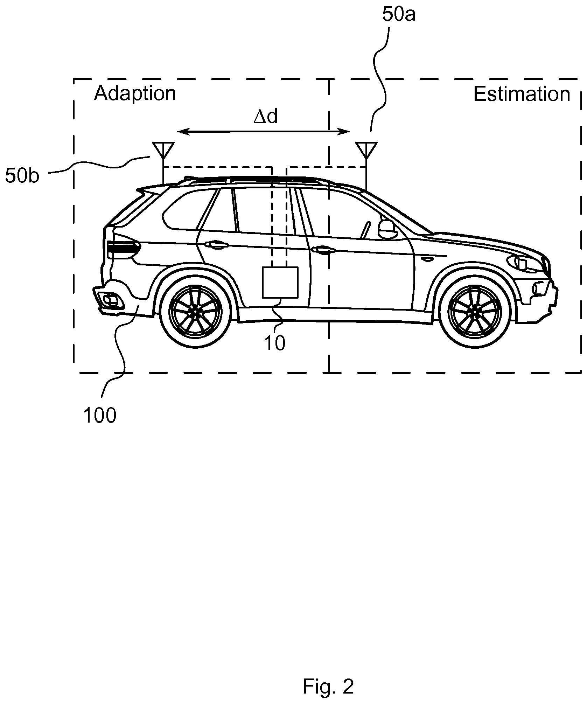

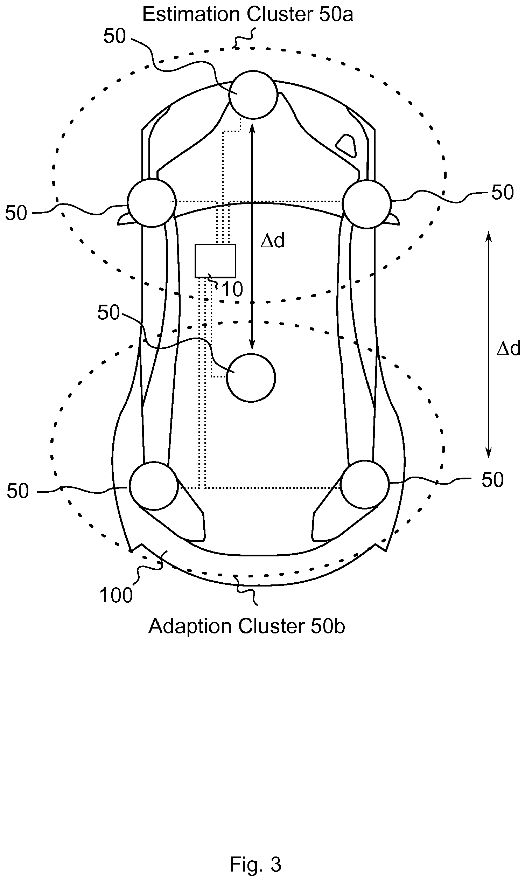

Fig. 2 zeigt ein Ausführungsbeispiel eines Fahrzeugs 100 mit einem Ausführungsbeispiel eines Sendeempfängers 10 gemäß obiger Beschreibung. Die beiden Untergruppen von Antennen 50a und 50b werden in der Fig. 2 durch jeweils eine Antenne symbolisiert. Der folgende Teil der Beschreibung beschreibt keinen Teil der vorliegenden Erfindung. Ferner wird angenommen, dass die beiden Untergruppen 50a und 50b einen Abstand Δd zueinander aufweisen. Dieser Abstand kann sich auf zwei Antennen in den unterschiedlichen Gruppen beziehen, prinzipiell sind auch Gruppen mit gleicher Anzahl von Antennen und jeweils gleicher geometrischer Anordnung innerhalb einer Gruppe denkbar, wobei dann der Abstand Δd jeweils zwischen miteinander korrespondierenden Antennen der Gruppen vorliegen würde. Die Fig. 3 zeigt ein weiteres Ausführungsbeispiel eines Fahrzeugs 100 mit einem Ausführungsbeispiel eines Sendeempfängers 10. Das Ausführungsbeispiel der Fig. 3 zeigt je drei Antennen in den Untergruppen 50a und 50b, die untereinander jeweils die gleiche geometrische Anordnung aufweisen. Das Ausführungsbeispiel des Fahrzeugs 100 umfasst die Mehrzahl von Antennen 50, wobei die erste Untergruppe 50a von Antennen die gleiche Anzahl von Antennen umfasst, wie die zweite Untergruppe 50b von Antennen. In diesem Ausführungsbeispiel weisen die Antennen der ersten Untergruppe 50a untereinander die gleiche Geometrie auf, wie die Antennen der zweiten Untergruppe 50b. Darüber hinaus weisen die Antennen der ersten Untergruppe 50a die gleiche Antennencharakteristika auf, wie die Antennen der zweiten Untergruppe 50b. Die erste Untergruppe 50a umfasst dabei jedoch entsprechend andere Antennen als die zweite Untergruppe 50b, und zueinander korrespondierende Antennen haben untereinander jeweils den gleichen Abstand.

Der folgende Teil der Beschreibung beschreibt ebenfalls keinen Teil der vorliegenden Erfindung. In dem Ausführungsbeispiel der Fig. 3 wird die erste Untergruppe 50a zur Schätzung der räumlichen Kanaleigenschaften verwendet. Die Information über den Radiokanal entspricht beispielsweise Information über zumindest eine Einfallsrichtung von Radiosignalen. Demzufolge kann aus der Information über die Einfallsrichtung an der ersten Untergruppe 50a auf die bevorstehende Einfallsrichtung an der zweiten Untergruppe 50b geschlossen werden, unter der Annahme dass sich das Fahrzeug in der Richtung von der zweiten Untergruppe 50b auf die erste Untergruppe hin bewegt.

Die Kontrolleinrichtung 16 gemäß der Fig. 1 ist dann ausgebildet, um anhand der Information über den Radiokanal zwischen der ersten Untergruppe 50a der Antennen und der Basisstation 20 des Mobilfunksystems 500 Information über eine Schätzung eines Radiokanals zwischen der zweiten Untergruppe 50b der Antennen und der Basisstation 20 des Mobilfunksystems 500 zu bestimmen. Die Kontrolleinrichtung 16 kann beispielsweise ausgebildet sein, um die Information über den Radiokanal zwischen der zweiten Untergruppe 50b der Antennen und der Basisstation 20 des Mobilfunksystems 500 basierend auf der Annahme zu bestimmen, dass zumindest eine Antenne der ersten Untergruppe 50a von Antennen in einer Fahrtrichtung des Fahrzeugs 100 vor zumindest einer Antenne der zweiten Untergruppe 50b angeordnet ist (Fig. 3 zeigt dieses geometrische Verhältnis für alle Antennen der ersten und der zweiten Untergruppe 50a, 50b). Wenn sich das Fahrzeug 100 nunmehr vorwärts bewegt, d.h. in Richtung von der zweiten Untergruppe 50b zur ersten Untergruppe 50a, erfährt die zweite Untergruppe 50b den gleichen Radiokanal wie die erste Untergruppe 50a zeitlich verzögert. Die Kontrolleinrichtung 16 kann dann beispielsweise ausgebildet sein, um die Information über den Radiokanal zwischen der zweiten Untergruppe 50b der Antennen und der Basisstation 20 des Mobilfunksystems 500 basierend auf der Annahme zu bestimmen, dass eine Antenne der zweiten Untergruppe 50b von Antennen den gleichen Radiokanal wie eine Antenne der ersten Untergruppe 50a zeitlich verzögert erfährt.

Der folgende Teil der Beschreibung beschreibt auch keinen Teil der vorliegenden Erfindung. In dem in der Fig. 3 gezeigten Ausführungsbeispiel entspricht die Mehrzahl von Antennen 50 einem Antennensystem mit dezentralen und/oder verteilten Antennen. Prinzipiell können die Antennen in beliebiger Form oder Anordnung über das Fahrzeug 100 verteilt sein. In manchen Ausführungsbeispielen ist ein zentraler Ausgangspunkt für die vorliegenden Maßnahmen ein verteiltes Antennensystem, bei dem ein Verfahren der kooperativen Kanalschätzung zum Einsatz kommen kann. Eine wesentliche Eigenschaft eines verteilten Antennensystems ist eine beliebig räumlich separierte Anordnung aus jeweils einer oder mehreren Antennen pro Standort. Die kooperative Kanalschätzung kann ermöglichen, durch Nutzung bekannter und etablierter Verfahren/Algorithmen zur Kanalschätzung an den Schätz-Antennen Rückschlüsse auf die Kanalparameter und deren Einfluss auf die Nachrichtenübertragung zu treffen. Kerneigenschaft der kooperativen Kanalschätzung ggü. einer nicht-kooperativen Kanalschätzung kann die Ausnutzung des Informationszugewinns durch Auswertung der räumlichen Diversität des verteilten Antennensystems sein.

Der folgende Teil der Beschreibung beschreibt keinen Teil der vorliegenden Erfindung. Das Fahrzeugantennensystem oder die Mehrzahl von Antennen 50, kann aus mehreren verteilten Einzelantennen oder Einzelantennensystemen bestehen. In dem Ausführungsbeispiele der Fig. 3 wird in ein Estimation-Cluster (erste Untergruppe 50a) und ein Adaptation-Antennencluster (zweite Untergruppe 50b) mit jeweils mehreren Antennen eingeteilt. Das Estimation-Antennencluster 50a ist für die kooperative Kanalschätzung verantwortlich und liefert ein oder mehrere relevante Kanalparameter wie Signal-zu-Rausch-Verhältnis (auch engl. Signal-to-Noise-Ratio (SNR)), Signal-zu-Interferenz-Verhältnis (auch engl. Signal-to-Interference-Ratio (SIR)), Signal-zu-Rausch-und-Interferenz-Verhältnis (auch engl. Signal-to-Noise-and-Interference-Ratio (SINR)), Empfangsspegel oder -leistungen (auch engl Receive Singal Strength Indicator (RSSI) oder Receive Signal Code Power (RSCP)), eine Bit-Energie E_{b} im Verhältnis zu einer Rauschleistungsdichte N₀, eine Rauschleistung (auch engl. channel noise) und/oder Einfallswinkel (auch engl. angle of arrival).

Der folgende Teil der Beschreibung beschreibt ebenfalls keinen Teil der vorliegenden Erfindung. In einem weiteren Ausführungsbeispiel ist die Kontrolleinrichtung 16 ausgebildet, um bei der Bestimmung der Information über den Radiokanal zwischen der zweiten Untergruppe 50b der Antennen und der Basisstation 20 des Mobilfunksystems 500 ferner eine Geschwindigkeit, Verfügbarkeitsinformation über das Mobilfunksystem und/oder eine Fahrtrichtung des Fahrzeugs 100 zu berücksichtigen. Die Kontrolleinrichtung 16 kann dann ferner ausgebildet sein, um über die ein oder mehreren Schnittstellen 12 Information über die Geschwindigkeit, die Verfügbarkeitsinformation über das Mobilfunksystem und/oder die Fahrtrichtung des Fahrzeugs 100 zu bestimmen. Die Verfügbarkeitsinformation kann dabei beispielsweise Information über eine aktuelle Verkehrslage (z.B. Echtzeitverkehrsinformation (auch engl. Real Time Traffic Information)), Information über Verfügbarkeitskarten des Mobilfunksystems, Information über einen Netzplan des Mobilfunksystems (z.B. Zellenverteilung, Frequenzverteilung, Verteilung/Verfügbarkeit von Zellen anderer Systeme), usw. umfassen.

Der folgende Teil der Beschreibung beschreibt auch keinen Teil der vorliegenden Erfindung. Durch die Verknüpfung und statistische Auswertung mehrerer Sensordaten (auch engl. Sensor Fusion), wie z.B. Geschwindigkeit und Fahrtrichtung sowie die Berücksichtigung kooperativer Verfügbarkeitsdaten werden bei der Kanalschätzung mehrere Eingangsgrößen berücksichtigt, um präzisere Vorhersagen über die Kanaleigenschaften (z.B. Vorausahnung Kanal oder Frequenz, Systemverfügbarkeit, usw.) treffen zu können. Die räumliche Trennung beider Cluster 50a, 50b erzeugt in diesem Ausführungsbeispiel einen Zeitvorteil der bei der Kanalschätzung zusätzlich ausgenutzt werden kann. Somit kann dieses Verfahren auch für hochmobile Szenarien angewendet werden, die schnellen Änderungen der Kanalparameter unterliegen können. Eine zentrale Kontrolleinheit (CU) als Implementierung der Kontrolleinrichtung 16 interpretiert die vorliegenden Daten, tauscht Informationen mit den autonomen Remote Radio Heads aus und ermöglicht ggf. einen Antennenwechsel im Adaptation-Antennencluster oder der zweiten Untergruppe 50b.

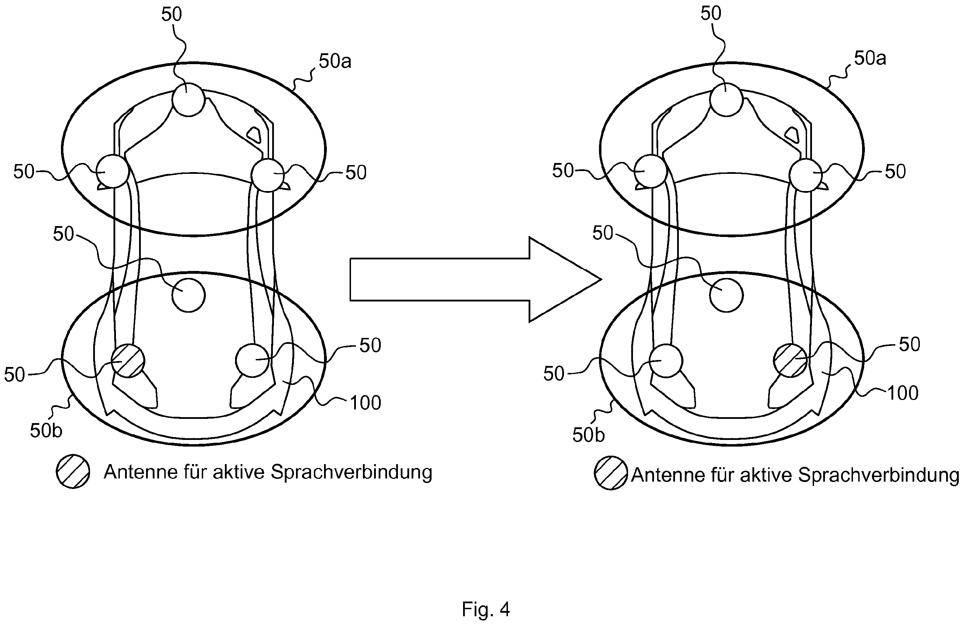

Der folgende Teil der Beschreibung beschreibt keinen Teil der vorliegenden Erfindung. In einem weiteren Ausführungsbeispiel ist die Kontrolleinrichtung 16 ausgebildet, um eine Auswahl von Antennen aus der Mehrzahl von Antennen 50 für die erste und die zweite Untergruppe 50a, 50b von Antennen adaptiv anzupassen. Wie bereits oben erläutert kann die Kontrolleinrichtung 16 ausgebildet sein, um die erste Untergruppe 50a von Antennen basierend auf einer Fahrtrichtung des Fahrzeugs 100 so auszuwählen, dass zumindest eine Antenne der ersten Untergruppe 50 in Fahrtrichtung des Fahrzeugs 100 vor zumindest einer Antenne der zweiten Untergruppe 50b angeordnet ist. Darüber hinaus kann die Kontrolleinrichtung 16 ausgebildet sein, um eine Anzahl von Antennen in der ersten Untergruppe 50a und/oder in der zweiten Untergruppe 50b von Antennen adaptiv anzupassen. Fig. 4 zeigt ein Ausführungsbeispiel eines Fahrzeugs 100 mit einem Ausführungsbeispiel eines Sendeempfängers 10 mit adaptiver Antennenwahl. Fig. 4 zeigt eine zeitliche Abfolge einer Antennenauswahl für die zweite Untergruppe 50b eines Fahrzeugs 100. In diesem Ausführungsbeispiel weist das Fahrzeug 6 Antennen auf, wobei die vorderen drei Antennen für die erste Untergruppe 50a ausgewählt sind. Es wird ferner angenommen, dass eine Sprachverbindung existiert, die über die zweite Untergruppe 50b bedient wird. Im linken Szenario wird für die Sprachverbindung die Antenne hinten links ausgewählt, wohingegen im rechten Szenario die Antenne hinten rechts ausgewählt wird. Die Grundlage für diese Auswahl bildet eine Kanalschätzung über die Antennen der ersten Untergruppe 50a.

Der folgende Teil der Beschreibung beschreibt ebenfalls keinen Teil der vorliegenden Erfindung. In Ausführungsbeispielen kann eine verbesserte oder sogar die bestmögliche Performance und Zuverlässigkeit (auch engl. reliability) für die Nachrichtenübertragung, beispielsweise im Rahmen eines Telefongesprächs, garantiert werden. Gegebenenfalls kann sogar der Abbruch einer Verbindung verhindert werden. Darüber hinaus kann im Adaptation-Antennencluster 50b das Verfahren der adaptiven Strahlformung (Beamforming) angewendet werden, um die Abstrahlcharakteristik der aktiven Antenne 50b ideal auf die Basisstation 20 auszurichten. Manche Ausführungsbeispiele können eine Leistungssteigerung im Sinne der maximal möglichen Datenrate und Zuverlässigkeit bewirken und unter Umständen eine Dienstgüte verbessern oder sogar eine beste Dienstgüte (auch engl. Quality of Service (QoS)) der Nachrichtenübertragung bereitstellen. Ausführungsbeispiele können auch in hochmobilen Szenarien angewendet werden.

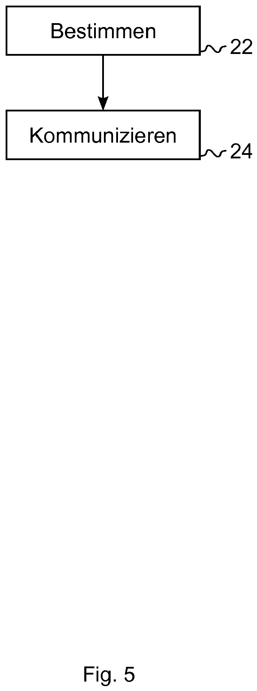

Fig. 5 zeigt ein Blockdiagramm eines Ausführungsbeispiels eines Verfahrens für einen Sendeempfänger 10 für ein Fahrzeug 100 zur Kommunikation in einem Mobilfunksystem 500. Das Verfahren umfasst ein Bestimmen 22 von Information über einen Radiokanal zwischen dem Sendeempfänger 10 und einer Basisstation 20 des Mobilfunksystems 500 über eine erste Untergruppe 50a einer Mehrzahl von Antennen 50. Das Verfahren umfasst ferner ein Kommunizieren 24 mit der Basisstation 20 des Mobilfunksystems 500 über eine zweite Untergruppe 50b der Mehrzahl von Antennen 50.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Der folgende Teil der Beschreibung beschreibt auch keinen Teil der vorliegenden Erfindung. Ein weiteres Ausführungsbeispiel ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Der folgende Teil der Beschreibung beschreibt keinen Teil der vorliegenden Erfindung. Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Der folgende Teil der Beschreibung beschreibt ebenfalls keinen Teil der vorliegenden Erfindung. Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Der folgende Teil der Beschreibung beschreibt keinen Teil der vorliegenden Erfindung. Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Der folgende Teil der Beschreibung beschreibt ebenfalls keinen Teil der vorliegenden Erfindung. Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Der folgende Teil der Beschreibung beschreibt auch keinen Teil der vorliegenden Erfindung. Allgemein können Ausführungsbeispiele der vorliegenden Erfindung als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Der folgende Teil der Beschreibung beschreibt keinen Teil der vorliegenden Erfindung. Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Der folgende Teil der Beschreibung beschreibt ebenfalls keinen Teil der vorliegenden Erfindung. Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

### Bezugszeichenliste

- 10: Sendeempfänger
- 12: ein oder mehrere Schnittstellen
- 14: Sendeempfangseinrichtung
- 16: Kontrolleinrichtung
- 20: Basisstation
- 22: Bestimmen
- 24: Kommunizieren
- 50: Mehrzahl von Antennen
- 50a: erste Untergruppe von Antennen
- 50b: zweite Untergruppe von Antennen
- 100: Fahrzeug
- 500: Mobilfunksystem

## Patentansprüche

1. Ein Sendeempfänger (10) für ein Fahrzeug (100) zur Kommunikation in einem Mobilfunksystem (500), mit
einer oder mehreren Schnittstellen (12) für eine Mehrzahl von Antennen (50);
einer Sendeempfangseinrichtung (14), die ausgebildet ist, um über die ein oder mehreren Schnittstellen (12) und über zumindest einen Teil der Mehrzahl der Antennen in dem Mobilfunksystem (500) zu kommunizieren;
einer Kontrolleinrichtung (16), die ausgebildet ist, um die Sendeempfangseinrichtung (14) und die ein oder mehreren Schnittstellen (12) zu kontrollieren,
wobei die Kontrolleinrichtung (16) ferner ausgebildet ist, um über eine erste Untergruppe (50a) der Mehrzahl von Antennen (50) Information über einen Radiokanal zwischen der ersten Untergruppe (50a) von Antennen und einer Basisstation (20) des Mobilfunksystems (500) zu bestimmen und um über eine zweite Untergruppe (50b) der Mehrzahl von Antennen (50) mit der Basisstation (20) des Mobilfunksystems (500) zu kommunizieren;
**dadurch gekennzeichnet, dass** die Kontrolleinrichtung (16) ausgebildet ist, um anhand der Information über den Radiokanal zwischen der ersten Untergruppe (50a) der Antennen und der Basisstation (20) des Mobilfunksystems (500) Information über einen Radiokanal zwischen der zweiten Untergruppe (50b) der Antennen und der Basisstation (20) des Mobilfunksystems (500) zu bestimmen; und
wobei die Kontrolleinrichtung (16) ausgebildet ist, um die Information über den Radiokanal zwischen der zweiten Untergruppe (50b) der Antennen und der Basisstation (20) des Mobilfunksystems (500) basierend auf der Annahme zu bestimmen, dass zumindest eine Antenne der ersten Untergruppe (50a) von Antennen in einer Fahrtrichtung des Fahrzeugs (100) vor zumindest einer Antenne der zweiten Untergruppe (50b) angeordnet ist, und/oder dass eine Antenne der zweiten Untergruppe (50b) von Antennen den gleichen Radiokanal wie eine Antenne der ersten Untergruppe (50a) zeitlich verzögert erfährt.

2. Sendeempfänger (10) gemäß Anspruch 1, wobei die Mehrzahl von Antennen (50) Antennen verschiedener Orientierung, verschiedener Polarisation, verschiedener Anbringungsorte an dem Fahrzeug (100), verschiedenen Antennengewinns, oder verschiedener Abstrahlcharakteristika umfasst, und/oder wobei die Mehrzahl von Antennen (50) einem Antennensystem mit dezentralen und/oder verteilten Antennen entspricht.

3. Sendeempfänger (10) gemäß einem der Ansprüche 1 oder 2, wobei die Information über den Radiokanal Information über zumindest eine Einfallsrichtung von Radiosignalen umfasst.

4. Sendeempfänger (10) gemäß Anspruch 1, wobei die Kontrolleinrichtung (16) ausgebildet ist, um bei der Bestimmung der Information über den Radiokanal zwischen der zweiten Untergruppe (50b) der Antennen und der Basisstation (20) des Mobilfunksystems (500) ferner eine Geschwindigkeit, Verfügbarkeitsinformation über das Mobilfunksystem und/oder eine Fahrtrichtung des Fahrzeugs (100) zu berücksichtigen.

5. Sendeempfänger (10) gemäß Anspruch 4, wobei die Kontrolleinrichtung (16) ausgebildet ist, um über die ein oder mehreren Schnittstellen Information über die Geschwindigkeit, die Verfügbarkeitsinformation über das Mobilfunksystem und/oder die Fahrtrichtung des Fahrzeugs (100) zu bestimmen.

6. Sendeempfänger (10) gemäß einem der vorangehenden Ansprüche, wobei die Kontrolleinrichtung (16) ausgebildet ist, um eine Auswahl von Antennen aus der Mehrzahl von Antennen (50) für die erste und die zweite Untergruppe (50a; 50b) von Antennen adaptiv anzupassen.

7. Sendeempfänger (10) gemäß einem der Ansprüche 1 oder 6, wobei die Kontrolleinrichtung (16) ausgebildet ist, um die erste Untergruppe (50a) von Antennen basierend auf einer Fahrtrichtung des Fahrzeugs (100) so auszuwählen, dass zumindest eine Antenne der ersten Untergruppe (50) in Fahrtrichtung des Fahrzeugs (100) vor zumindest einer Antenne der zweiten Untergruppe (50b) angeordnet ist.

8. Sendeempfänger (10) gemäß einem der vorangehenden Ansprüche, wobei die Kontrolleinrichtung (16) ausgebildet ist, um eine Anzahl von Antennen in der ersten Untergruppe (50a) und/oder in der zweiten Untergruppe (50b) von Antennen adaptiv anzupassen.

9. Sendeempfänger (10) gemäß einem der vorangehenden Ansprüche, bei dem die Sendeempfangseinrichtung (12) zwei oder mehr Sendeempfangsmodule umfasst, die mit der Mehrzahl von Antennen (50) gekoppelt sind.

10. Sendeempfänger (10) gemäß einem der vorangehenden Ansprüche, wobei die Kontrolleinrichtung (16) ausgebildet ist, um über die Antennen in der zweiten Untergruppe (50b) eine Strahlformung bezüglich der Basisstation (20) des Mobilfunksystems (500) durchzuführen.

11. Sendeempfänger (10) gemäß Anspruch 10, wobei die Kontrolleinrichtung (16) ausgebildet ist, um eine Strahlformung über die Antennen in der zweiten Untergruppe (50b) adaptiv anzupassen.

12. Fahrzeug (100) mit einem Sendeempfänger (10) gemäß einem der vorangehenden Ansprüche.

13. Fahrzeug (100) gemäß Anspruch 12, das ferner die Mehrzahl von Antennen (50) umfasst, wobei die erste Untergruppe (50a) von Antennen die gleiche Anzahl von Antennen umfasst, wie die zweite Untergruppe (50b) von Antennen.

14. Fahrzeug (100) gemäß Anspruch 13, wobei die Antennen der ersten Untergruppe (50a) untereinander die gleiche Geometrie aufweisen, wie die Antennen der zweiten Untergruppe (50b).

15. Fahrzeug (100) gemäß einem der Ansprüche 13 oder 14, wobei die Antennen der ersten Untergruppe (50a) die gleiche Antennencharakteristik aufweisen, wie die Antennen der zweiten Untergruppe (50b).

16. Fahrzeug (100) gemäß einem der Ansprüche 13 bis 15, wobei die erste Untergruppe (50a) andere Antennen als die zweite Untergruppe (50b) umfasst.

17. Ein Verfahren für einen Sendeempfänger (10) für ein Fahrzeug (100) zur Kommunikation in einem Mobilfunksystem (500), mit
Bestimmen (22) von Information über einen Radiokanal zwischen einer ersten Untergruppe (50a) von Antennen einer Mehrzahl von Antennen (50) und einer Basisstation (20) des Mobilfunksystems (500),
**dadurch gekennzeichnet, dass** anhand der Information über den Radiokanal zwischen der ersten Untergruppe (50a) der Antennen und der Basisstation (20) des Mobilfunksystems (500) Information über einen Radiokanal zwischen der zweiten Untergruppe (50b) der Antennen und der Basisstation (20) des Mobilfunksystems (500) bestimmt werden; und
Bestimmen, durch die Kontrolleinrichtung (16), der Information über den Radiokanal zwischen der zweiten Untergruppe (50b) der Antennen und der Basisstation (20) des Mobilfunksystems (500) basierend auf der Annahme, dass zumindest eine Antenne der ersten Untergruppe (50a) von Antennen in einer Fahrtrichtung des Fahrzeugs (100) vor zumindest einer Antenne der zweiten Untergruppe (50b) angeordnet ist, und/oder dass eine Antenne der zweiten Untergruppe (50b) von Antennen den gleichen Radiokanal wie eine Antenne der ersten Untergruppe (50a) zeitlich verzögert erfährt;
Kommunizieren (24) mit der Basisstation (20) des Mobilfunksystems (500) über eine zweite Untergruppe (50b) der Mehrzahl von Antennen (50).

18. Ein Computerprogramm zur Durchführung des Verfahrens nach Anspruch 17, wenn das Computerprogramm auf einem Computer, einem Prozessor oder einer programmierbaren Hardwarekomponente abläuft.

## Claims

1. Transceiver (10) for a vehicle (100) for communication in a mobile radio system (500), comprising
one or more interfaces (12) for a plurality of antennas (50);
a transceiving device (14) which is designed to communicate via the one or more interfaces (12) and via at least a part of the plurality of antennas in the mobile radio system (500);
a control device (16) which is designed to control the transceiving device (14) and the one or more interfaces (12),
the control device (16) also being designed to determine via a first cluster (50a) of the plurality of antennas (50) information about a radio channel between the first cluster (50a) of antennas and a base station (20) of the mobile radio system (500) and to communicate via a second cluster (50b) of the plurality of antennas (50) with the base station (20) of the mobile radio system (500),
**characterized in that** the control device (16) is designed to determine by means of the information about the radio channel between the first cluster (50a) of the antennas and the base station (20) of the mobile radio system (500) information about a radio channel between the second cluster (50b) of the antennas and the base station (20) of the mobile radio system (500); and
wherein the control device (16) is designed to determine the information about the radio channel between the second cluster (50b) of the antennas and the base station (20) of the mobile radio system (500) on the basis of the assumption that at least one antenna of the first cluster (50a) of antennas is arranged in a direction of travel of the vehicle (100) in front of at least one antenna of the second cluster (50b), and/or that an antenna of the second cluster (50b) of antennas experiences the same radio channel as an antenna of the first cluster (50a) delayed in time.

2. Transceiver (10) according to Claim 1, wherein the plurality of antennas (50) comprise antennas of different orientation, different polarization, different mounting locations on the vehicle (100), different antenna gains or different radiation characteristics, and/or wherein the plurality of antennas (50) correspond to an antenna system having decentralized and/or distributed antennas.

3. Transceiver (10) according to either of Claims 1 and 2, wherein the information about the radio channel comprises information about at least one direction of incidence of radio signals.

4. Transceiver (10) according to Claim 1, wherein the control device (16) is designed to take into consideration in the determination of the information about the radio channel between the second cluster (50b) of the antennas and the base station (20) of the mobile radio system (500) also a speed, availability information about the mobile radio system and/or a direction of travel of the vehicle (100).

5. Transceiver (10) according to Claim 4, wherein the control device (16) is designed to determine via the one or more interfaces information about the speed, the availability information about the mobile radio system and/or the direction of travel of the vehicle (100).

6. Transceiver (10) according to one of the preceding claims, wherein the control device (16) is designed to adaptively match a selection of antennas from the plurality of antennas (50) for the first and the second cluster (50a; 50b) of antennas.

7. Transceiver (10) according to either of Claims 1 and 6, wherein the control device (16) is designed to select the first cluster (50a) of antennas on the basis of a direction of travel of the vehicle (100) in such a way that at least one antenna of the first cluster (50) is arranged in front of at least one antenna of the second cluster (50b) in the direction of travel of the vehicle (100) .

8. Transceiver (10) according to one of the preceding claims, wherein the control device (16) is designed to adaptively match a number of antennas in the first cluster (50a) and/or in the second cluster (50b) of antennas.

9. Transceiver (10) according to one of the preceding claims, in which the transceiving device (12) comprises two or more transceiving modules which are coupled to the plurality of antennas (50).

10. Transceiver (10) according to one of the preceding claims, wherein the control device (16) is designed to carry out beam forming with respect to the base station (20) of the mobile radio system (500) via the antennas in the second cluster (50b).

11. Transceiver (10) according to Claim 10, wherein the control device (16) is designed to adaptively match beam forming via the antennas in the second cluster (50b) .

12. Vehicle (100) comprising a transceiver (10) according to one of the preceding claims.

13. Vehicle (100) according to Claim 12 which also comprises the plurality of antennas (50), wherein the first cluster (50a) of antennas comprises the same number of antennas as the second cluster (50b) of antennas.

14. Vehicle (100) according to Claim 13, wherein the antennas of the first cluster (50a) have the same geometry with respect to one another as the antennas of the second cluster (50b).

15. Vehicle (100) according to either of Claims 13 and 14, wherein the antennas of the first cluster (50a) have the same antenna characteristic as the antennas of the second cluster (50b).

16. Vehicle (100) according to one of Claims 13 to 15, wherein the first cluster (50a) comprises other antennas than the second cluster (50b).

17. Method for a transceiver (10) for a vehicle (100) for communication in a mobile radio system (500), comprising
determining (22) information about a radio channel between a first cluster (50a) of antennas of a plurality of antennas (50) and a base station (20) of the mobile radio system (500),
**characterized in that** information about a radio channel between the second cluster (50b) of the antennas and the base station (20) of the mobile radio system (500) is determined by means of the information about the radio channel between the first cluster (50a) of the antennas and the base station (20) of the mobile radio system (500); and determining, by means of the control device (16), the information about the radio channel between the second cluster (50b) of the antennas and the base station (20) of the mobile radio system (500) on the basis of the assumption that at least one antenna of the first cluster (50a) of antennas is arranged in a direction of travel of the vehicle (100) in front of at least one antenna of the second cluster (50b), and/or that an antenna of the second cluster (50b) of antennas experiences the same radio channel as an antenna of the first cluster (50a) delayed in time;
communicating (24) with the base station (20) of the mobile radio system (500) via a second cluster (50b) of the plurality of antennas (50).

18. Computer program for carrying out the method according to Claim 17 when the computer program is run on a computer, a processor or a programmable hardware component.

## Revendications

1. Émetteur-récepteur (10) pour un véhicule (100) destiné à la communication dans un système de radiocommunication mobile (500), comprenant une ou plusieurs interfaces (12) pour une pluralité d'antennes (50) ;
un dispositif émetteur-récepteur (14), qui est configuré pour communiquer par le biais de l'une ou des plusieurs interfaces (12) et par le biais d'au moins une partie de la pluralité d'antennes dans le système de radiocommunication mobile (500) ;
un dispositif de contrôle (16), qui est configuré pour contrôler le dispositif émetteur-récepteur (14) ainsi que l'une ou les plusieurs interfaces (12),
le dispositif de contrôle (16) étant en outre configuré pour, par le biais d'un premier sous-groupe (50a) de la pluralité d'antennes (50), déterminer des informations à propos d'un canal de radiocommunication entre le premier sous-groupe (50a) d'antennes et une station de base (20) du système de radiocommunication mobile (500) et pour, par le biais d'un deuxième sous-groupe (50b) de la pluralité d'antennes (50), communiquer avec la station de base (20) du système de radiocommunication mobile (500) ;
**caractérisé en ce que** le dispositif de contrôle (16) est configuré pour, à l'aide des informations à propos du canal de radiocommunication entre le premier sous-groupe (50a) d'antennes et la station de base (20) du système de radiocommunication mobile (500), déterminer des informations à propos d'un canal de radiocommunication entre le deuxième sous-groupe (50b) d'antennes et la station de base (20) du système de radiocommunication mobile (500) ; et
le dispositif de contrôle (16) étant en outre configuré pour déterminer les informations à propos du canal de radiocommunication entre le deuxième sous-groupe (50b) d'antennes et la station de base (20) du système de radiocommunication mobile (500) en se basant sur l'hypothèse selon laquelle au moins une antenne du premier sous-groupe (50a) d'antennes est disposée devant au moins une antenne du deuxième sous-groupe (50b) dans une direction de déplacement du véhicule (100), et/ou
selon laquelle une antenne du deuxième sous-groupe (50b) d'antennes connaît, avec un retard temporel, le même canal de radiocommunication qu'une antenne du premier sous-groupe (50a).

2. Émetteur-récepteur (10) selon la revendication 1, la pluralité d'antennes (50) comprenant des antennes ayant des orientations différentes, des polarisations différentes, des lieux d'installation différents sur le véhicule (100), des gains d'antenne différents ou des caractéristiques de rayonnement différentes, et/ou la pluralité d'antennes (50) correspondant à un système d'antenne avec des antennes décentralisées et/ou distribuées.

3. Émetteur-récepteur (10) selon l'une des revendications 1 ou 2, les informations à propos du canal de radiocommunication comprenant des informations à propos d'au moins une direction d'incidence de signaux radioélectriques.

4. Émetteur-récepteur (10) selon la revendication 1, le dispositif de contrôle (16) étant configuré pour, lors de la détermination des informations à propos du canal de radiocommunication entre le deuxième sous-groupe (50b) d'antennes et la station de base (20) du système de radiocommunication mobile (500), tenir compte en plus d'une vitesse, d'informations de disponibilité à propos du système de radiocommunication mobile et/ou d'une direction de déplacement du véhicule (100).

5. Émetteur-récepteur (10) selon la revendication 4, le dispositif de contrôle (16) étant configuré pour, par le biais de l'une ou des plusieurs interfaces, déterminer des informations à propos de la vitesse, les informations de disponibilité à propos du système de radiocommunication mobile et/ou la direction de déplacement du véhicule (100).

6. Émetteur-récepteur (10) selon l'une des revendications précédentes, le dispositif de contrôle (16) étant configuré pour adapter de manière adaptative une sélection d'antennes à partir de la pluralité d'antennes (50) pour le premier et le deuxième sous-groupe (50a ; 50b) d'antennes.

7. Émetteur-récepteur (10) selon l'une des revendications 1 ou 6, le dispositif de contrôle (16) étant configuré pour sélectionner le premier sous-groupe (50a) d'antennes en se basant sur une direction de déplacement du véhicule (100) de telle sorte qu'au moins une antenne du premier sous-groupe (50) est disposée devant au moins une antenne du deuxième sous-groupe (50b) dans la direction de déplacement du véhicule (100).

8. Émetteur-récepteur (10) selon l'une des revendications précédentes, le dispositif de contrôle (16) étant configuré pour adapter de manière adaptative un nombre d'antennes dans le premier sous-groupe (50a) et/ou dans le deuxième sous-groupe (50b) d'antennes.

9. Émetteur-récepteur (10) selon l'une des revendications précédentes, avec lequel le dispositif émetteur-récepteur (12) comporte deux modules émetteurs-récepteurs ou plus, lesquels sont couplés à la pluralité d'antennes (50).

10. Émetteur-récepteur (10) selon l'une des revendications précédentes, le dispositif de contrôle (16) étant configuré pour, par le biais des antennes dans le deuxième sous-groupe (50b), effectuer une formation de faisceau concernant la station de base (20) du système de radiocommunication mobile (500).

11. Émetteur-récepteur (10) selon la revendication 10, le dispositif de contrôle (16) étant configuré pour adapter de manière adaptative une formation de faisceau par le biais des antennes dans le deuxième sous-groupe (50b) .

12. Véhicule (100) comprenant un émetteur-récepteur (10) selon l'une des revendications précédentes.

13. Véhicule (100) selon la revendication 12, lequel comporte en plus la pluralité d'antennes (50), le premier sous-groupe (50a) d'antennes comprenant le même nombre d'antennes que le deuxième sous-groupe (50b) d'antennes.

14. Véhicule (100) selon la revendication 13, les antennes du premier sous-groupe (50a) présentant entre elles la même géométrie que les antennes du deuxième sous-groupe (50b).

15. Véhicule (100) selon l'une des revendications 14 ou 15, les antennes du premier sous-groupe (50a) présentant la même caractéristique d'antenne que les antennes du deuxième sous-groupe (50b).

16. Véhicule (100) selon l'une des revendications 13 à 15, le premier sous-groupe (50a) comprenant d'autres antennes que le deuxième sous-groupe (50b).

17. Procédé pour un émetteur-récepteur (10) pour un véhicule (100) destiné à la communication dans un système de radiocommunication mobile (500), comprenant
détermination (22) d'informations à propos d'un canal de radiocommunication entre un premier sous-groupe (50a) d'antennes d'une pluralité d'antennes (50) et une station de base (20) du système de radiocommunication mobile (500),
**caractérisé en ce que**, à l'aide des informations à propos du canal de radiocommunication entre le premier sous-groupe (50a) d'antennes et la station de base (20) du système de radiocommunication mobile (500), des informations sont déterminées à propos d'un canal de radiocommunication entre le deuxième sous-groupe (50b) d'antennes et la station de base (20) du système de radiocommunication mobile (500) ; et
détermination, par le dispositif de contrôle (16), des informations à propos du canal de radiocommunication entre le deuxième sous-groupe (50b) d'antennes et la station de base (20) du système de radiocommunication mobile (500) en se basant sur l'hypothèse selon laquelle au moins une antenne du premier sous-groupe (50a) d'antennes est disposée devant au moins une antenne du deuxième sous-groupe (50b) dans une direction de déplacement du véhicule (100), et/ou selon laquelle une antenne du deuxième sous-groupe (50b) d'antennes connaît, avec un retard temporel, le même canal de radiocommunication qu'une antenne du premier sous-groupe (50a) ;
communication (24) avec la station de base (20) du système de radiocommunication mobile (500) par le biais d'un deuxième sous-groupe (50b) de la pluralité d'antennes (50).

18. Programme informatique destiné à mettre en œuvre le procédé selon la revendication 17, lorsque le programme informatique est exécuté sur un ordinateur, un processeur ou un composant matériel programmable.
